# EUROPÄISCHE PATENTSCHRIFT

(11) **EP 4 165 249 B1**
(45) Veröffentlichungstag und Bekanntmachung des Hinweises auf die Patenterteilung: **03.09.2025**
(21) Anmeldenummer: 21734062.9
(22) Anmeldetag: 14.06.2021
(51) Int. Cl.: E01B 31/00, E01B 31/13, E01B 31/18, E01B 9/62, E01B 11/46, E01B 13/00, E01B 19/00, E01B 21/00, E01B 29/46, B23K 37/00

(54) **VERFAHREN ZUM REPARATUR- ODER ÄNDERUNGSSCHWEISSEN EINER SCHIENE**
METHOD FOR THE REPAIR WELDING OR MODIFICATION WELDING OF A RAIL
PROCÉDÉ POUR SOUDER UN RAIL À DES FINS DE RÉPARATION OU DE MODIFICATION

(30) Priorität: 16.06.2020 DE 102020115800
(43) Veröffentlichungstag der Anmeldung: 19.04.2023
(73) Patentinhaber: Lind-Rüdt, Andrea, 79771 Klettgau-Bühl (DE)
(72) Erfinder: Lind-Rüdt, Andrea, 79771 Klettgau-Bühl (DE)
(74) Vertreter: Stüven, Ralf
(86) Internationale Anmeldenummer: PCT/EP2021/065890
(87) Internationale Veröffentlichungsnummer: WO 2021/254929

(56) Entgegenhaltungen:
- EP-A1- 0 937 817
- DE-A1- 102013 110 182
- DE-A1- 102016 112 720

## Beschreibung

Die Erfindung betrifft ein Verfahren zum Reparatur- oder Änderungsschweißen einer Schiene, insbesondere einer Rillenschiene.

Bei Schienen, die in Beton, Asphalt etc. eingebettet sind, beispielsweise Straßenbahnschienen, wird häufig ein Schienenlängsverguss (SLV, auch Fugenband) eingesetzt. Dabei handelt es sich häufig um eine bituminöse elastische Masse, die in eine seitlich entlang der Schiene im umgebenden Material vorgesehene Schienenfuge gegossen wird. Die Vergussmasse dient als Arbeitsfuge zwischen der sich bewegenden Schiene und dem starren Umgebungsmaterial, und dazu, zu verhindern, dass die Radbandage der Straßenbahn auf dem harten Umgebungsmaterial läuft. Zur Herstellung der Schienenfuge wird nach dem Einbringen des starren Umgebungsmaterials (Beton, Asphalt etc.) in einem zusätzlichen Arbeitsgang auf der Baustelle eine Fuge in der nötigen Breite, beispielsweise in der Breite der überstehenden Radbandage, gefräst und vergossen.

Eine Reparatur- oder Änderungsschweißung der Schiene ist aufgrund des die Schiene flankierenden Vergussmaterials schwierig durchzuführen. Vielfach wird der Schienenlängsverguss vor der schweißtechnischen Änderung oder Instandsetzung nicht entfernt, was zu mangelhaften Schweißungen führen kann. Es kann auch vorkommen, dass die durch das Vorwärmen der Schiene auf eine Temperatur 200-250 °C für die Schweißung verflüssigte Vergussmasse über die zu schweißende Stelle läuft, so dass die Schweißung nicht ausgeführt werden kann. Der vollständige Ausbau des Vergusses wiederum ist mit einem sehr hohen Zeit- und Kostenaufwand verbunden, da derartige Arbeiten, die in der Regel nur in betriebsfreien Zeiten ausgeführt werden können, mit entsprechendem Vorlauf aufwändig geplant werden müssen. Beim mechanischen Ausbau des Fugenvergusses mittels entsprechender Werkzeuge kommt es immer wieder vor, dass das seitlich angrenzende Umgebungsmaterial, z.B. Asphalt, in Mitleidenschaft gezogen wird. Dieses muss anschließend wieder ausgebessert oder sogar teilweise neu eingebaut werden. Darüber hinaus dürfen bestimmte Vergussmassen, beispielsweise Zweikomponenten-Vergussmassen, ohnehin nur von Hand entfernt werden.

In der DE 10 2016 112 720 A1 ist eine Dämpfungsanordnung beschrieben, bei der ein Seitenprofil, d.h. ein seitlich der Schiene angeordnetes Dämpfungsprofil vorgesehen ist, das so ausgestaltet ist, dass es die Funktion des Schienenlängsvergusses übernehmen kann, so dass auf dessen Einsatz ganz verzichtet werden kann.

Aufgabe der vorliegenden Erfindung ist es, ein Verfahren bereit zu stellen, dass möglichst einfach durchzuführen ist und eine Reparatur- oder Änderungsschweißung von Schienen mit flankierender Fugenvergussmasse ohne die obigen Nachteile ermöglicht.

Erfindungsgemäß gelöst wird die Aufgabe durch ein Verfahren zum Reparatur- oder Änderungsschweißen einer Schiene mit einem eine Schienenkopfflanke aufweisenden Schienenkopf, wobei die Schiene auf mindestens einer ihrer Längsseiten in Höhe des Schienenkopfes von einem an der Schienenkopfflanke anliegenden Schienenlängsverguss flankiert ist, umfassend den Schritt des Herstellens einer in Längsrichtung der Schiene verlaufenden, von der Schienenkopfflanke beabstandeten Ausnehmung in dem Schienenlängsverguss, und ferner umfassend den Schritt des Reparatur- oder Änderungsschweißens der Schiene in dem Schienenbereich mit der im Schienenlängsverguss hergestellten Ausnehmung.

Es hat sich überraschend herausgestellt, dass bei Schienen mit flankierendem Schienenlängsverguss eine zuverlässige Reparatur- oder Änderungsschweißung auf einfache Weise ohne aufwändigen Ausbau des Vergusses möglich ist, indem Vergussmaterial entfernt wird, so dass eine längs der Schiene verlaufende Ausnehmung in dem Vergussmaterial entsteht. Die Ausnehmung bildet im Bereich der durch Schweißung zu reparierenden Stelle eine in dem Schienenlängsverguss parallel zur Schiene verlaufende Rinne, die verflüssigtes Vergussmaterial, das beim Erwärmen der Schiene im Rahmen einer schweißtechnischen Instandsetzung anfällt, aufnimmt und so von der Schweißstelle fernhält. Durch die in dem Schienenlängsverguss hergestellte Ausnehmung wird somit Vergussmaterial in der Umgebung der zu reparierenden Stelle der Schiene entfernt, wodurch die Menge an Vergussmaterial, das sich verflüssigen kann, reduziert wird. Darüber hinaus bildet die Ausnehmung eine Kavität, in die noch vorhandenes vor oder während des Schweißvorgangs sich verflüssigendes Vergussmaterial aufgefangen werden kann.

Unter einer "Schiene" wird hier eine Bahnschiene, beispielsweise eine Rillenschiene, Vignolschiene oder Kranschiene verstanden.

Unter "Reparatur- oder Änderungsschweißen " wird in Bezug auf eine Schiene die präventive oder korrektive Änderung oder Instandsetzung oder -haltung einer Schiene in Einbausituation mittels Schweißverfahren verstanden. Der Begriff umfasst beispielsweise die Beseitigung von Schienenschäden mittels Schweißens. Bei den Schienenschäden kann es sich um Brüche, Risse, Abnutzung aufgrund von Verschleiß durch den Fahrbetrieb, z.B. Spurerweiterungen, oder andere Fehler an einer Schiene handeln, zu deren Reparatur oder Beseitigung Schweißverfahren zum Einsatz kommen. Der Begriff umfasst auch die Auftragschweißung ("Cladding") von Schienen.

Unter einem "Schienenlängsverguss'" (auch "Fugenband", "Fugenverguss", "Schienenverguss" oder "Schienenfugenverguss") wird ein in Längsrichtung parallel zu einer Schiene in einer Fuge angeordneter Dehnungs- oder Dämpfungsstreifen aus einem oder mehreren thermoplastischen Stoffen, beispielsweise Bitumen, polymermodifiziertem Bitumen (PmB), Polyurethanen, Polysulfiden, silanmodifizierten Polymeren (SMP) und dergleichen verstanden. Der streifenförmige Schienenlängsverguss umfasst ein unter Wärmeeinwirkung sich verflüssigendes Material, welches in eine neben einer Schiene im umgebenden Material, z.B. Straßenbelag, verlaufenden Fuge eingegossen wird und nach dem Aushärten zwischen Schiene und Umgebungsmaterial als Dämpfungs- und Dehnmaterial fungiert. Der Schienenlängsverguss kann eine Schiene sowohl zur Außenseite (vom Gleisinneren weg) als auch zur Innenseite (zum Gleisinneren hin) flankieren.

Die Begriffe "außen" und "innen" in Bezug auf eine Schiene beziehen sich auf eine übliche Gleiskonstruktion mit zwei parallel verlaufenden Schienen und einem dazwischen liegenden Gleisinneren. Die Begriffe "außen", "äußere" etc. bezeichnen somit eine Orientierung vom Gleisinneren weg. Der Begriff "äußerer Schienenlängsverguss" bezeichnet daher einen Schienenlängsverguss an der Außenseite einer Schiene, d.h. an der vom Gleisinneren abgewandten Seite der Schiene. Der Begriff "innerer Schienenlängsverguss" bezeichnet einen Schienenlängsverguss, der auf der zum Gleisinneren orientierten Seite angeordnet ist. Entsprechend bezeichnet der Begriff "äußere Schienenkopfflanke" eine vom Gleisinneren wegweisende Flanke des Schienenkopfes, der Begriff "äußere Schienenkopfunterseite" jene Unterseite des Schienenkopfes, die auf der dem Gleisinneren gegenüberliegenden Seite der Schiene liegt. Zum Gleisinneren sind regelmäßig auch die Spurkränze der Spurkranzräder von Schienenfahrzeugen orientiert.

Unter einer "Längsseite" einer Schiene wird eine in Längsrichtung der Schiene sich erstreckende Seitenfläche der Schiene verstanden, die nach außen, d.h. vom Gleisinneren weg, oder nach innen, d.h. zum Gleisinneren hin, gerichtet sein kann.

Unter einem "Spurkranzrad" wird hier ein Rad verstanden, das einen randständig an der Radscheibe über eine Lauffläche eines Rades vorstehenden Spurkranz aufweist. Die Lauffläche wird hier auch als "Radbandage" bezeichnet.

Der Ausdruck, wonach die Ausnehmung von der Schienenkopfflanke beabstandet ist, bedeutet, dass zwischen der Schienenkopfflanke und der Ausnehmung noch Material des Schienenlängsvergusses verbleibt, der nicht zur Ausbildung der Ausnehmung entfernt wird. Ein Teil des die Schienenkopfflanke unmittelbar kontaktierenden Schienenlängsvergusses bleibt somit ausgenommen. Das schließt natürlich nicht aus, dass sich dieser Teil durch die Wärmeeinwirkung im Verlauf des Schweißvorgangs verflüssigt.

In einer bevorzugten Ausführungsform wird die Ausnehmung durch Zerspanen mittels einer schienengeführten Fräsmaschine in dem Schienenlängsverguss hergestellt. Bei dieser Ausführungsform des erfindungsgemäßen Verfahrens wird eine zwangsgeführte Fräsmaschine verwendet, die mittels geeigneter Mittel auf dem Gleis geführt werden kann, von dem mindestens eine Schiene mittels schweißtechnischer Verfahren repariert werden soll. Die Fräsmaschine kann mittels Spurkranzrädern, die im Abstand der ein Gleis bildenden Schienen zueinander angeordnet sind, exakt parallel entlang der jeweiligen Schiene geführt werden. Die Fräsmaschine weist beispielsweise ein rotierendes Schneidwerkzeug auf, mittels dessen Material des Schienenlängsvergusses so abgetragen wird, dass eine allgemein u-förmige beziehungsweise rinnenförmige Ausnehmung gebildet wird.

In einer besonders bevorzugten Ausführungsform des erfindungsgemäßen Verfahrens erfolgt das Zerspanen nach oder unter geeigneter Kühlung des Schienenlängsvergusses und/oder eines Schneidwerkzeugs der Fräsmaschine. Vorzugsweise erfolgt die Kühlung mittels einer Kryoflüssigkeit, bevorzugt eines unter Druck verflüssigten Gases, beispielsweise flüssigem Stickstoff (N₂), flüssigem Helium (He) oder flüssigem Kohlendioxid (CO₂). Kohlendioxid 3.0 (≥99,9 Vol.-% CO₂) ist beispielsweise gut geeignet. Die Kühlung des Schneidwerkzeugs der Fräsmaschine und auch des Schienenlängsvergusses kann beispielsweise erfolgen, indem das Kühlmittel, z.B. flüssiges Kohlendioxid, durch in dem Schneidwerkzeug vorgesehene Kanäle in das Schneidwerkzeugs und über Öffnungen in dem Schneidwerkzeug in Richtung Schienenlängsverguss geleitet wird. Die Kühlung des Schienenlängsverguss und/oder des Schneidwerkzeugs erleichtert die Bildung der Ausnehmung in dem Schienenlängsverguss. Es ist erfindungsgemäß auch möglich, den Schienenlängsverguss separat vor dem Fräsvorgang entsprechend vorzukühlen.

Nachdem die Schienenumgebung vorzugsweise in dem Bereich, in dem eine Schieneninstandsetzung oder -änderung mittels schweißtechnischer Verfahren erfolgen soll, derartig vorbereitet ist, kann eine Reparatur- oder Änderungsschweißung einer Schiene in dem Schienenbereich mit der im Schienenlängsverguss hergestellten Ausnehmung erfolgen. Dabei erfolgt regelmäßig eine Vorwärmung der Schiene auf eine geeignete Temperatur, beispielsweise 200-250 °C oder mehr, wobei es zum Schmelzen des die Schiene flankierenden Schienenlängsvergusses entlang des erwärmten Schienenbereichs kommen kann. Gemäß der vorliegenden Erfindung wird jedoch durch den vorgehenden Abtrag eines Teils des Materials des Schienenlängsvergusses und durch die in dem Schienenlängsverguss ausgebildete Rinne verhindert, dass verflüssigtes Material des Schienenlängsvergusses in den Bereich der Schiene vordringt, in dem die Schweißung erfolgt. Auf diese Weise können qualitativ hochwertige Reparatur- oder Änderungsschweißungen vorgenommen werden, ohne dass es einer vollständigen Entfernung des Schienenlängsvergusses bedarf.

Im Anschluss an die Reparatur- oder Änderungsschweißung der Schiene kann in einem weiteren Schritt das Wiederherstellen des Schienenlängsvergusses in dem Schienenbereich mit der im Schienenlängsverguss hergestellten Ausnehmung erfolgen. Dies kann beispielsweise erfolgen, indem in dem Bereich im Wesentlichen die Menge Material des Schienenlängsvergusses wieder ergänzt wird, die vorher durch die Fräsmaschine entfernt wurde. Das kann durch die im Stand der Technik zur Herstellung des Schienenlängsvergusses bekannten Mittel und Verfahren erfolgen. Die Ergänzung des Materials kann unmittelbar nach der Reparatur- oder Änderungsschweißung bei noch verflüssigtem Schienenlängsverguss erfolgen, oder auch später, indem das verbliebene Material des Schienenlängsverguss erneut verflüssig und um fehlendes Material ergänzt wird, oder indem auf den erkalteten Schienenlängsverguss zusätzliches Material aufgeschichtet wird.

Das Verfahren gemäß der Erfindung umfasst somit vorzugsweise die folgenden Schritte des
a) Herstellens einer in Längsrichtung der Schiene verlaufenden, von der Schienenkopfflanke beabstandeten Ausnehmung in einem die Schiene flankierenden Schienenlängsverguss,
b) Reparatur- oder Änderungsschweißens der Schiene in dem Schienenbereich mit der im Schienenlängsverguss hergestellten Ausnehmung, und
c) Instandsetzens des Schienenlängsverguss in dem Schienenbereich mit der im Schienenlängsverguss hergestellten Ausnehmung.

In einer bevorzugten Ausführungsform des erfindungsgemäßen Verfahrens ist die Schiene als Rillenschiene ausgebildet. Der Schienenkopf einer solchen Rillenschiene umfasst eine Fahrschiene mit einem Fahrschienenkopf und eine Leitschiene mit einem Leitschienenkopf sowie eine zwischen Fahrschiene und Leitschiene gebildete Rille. Die Leitschiene, die einstückig mit der Fahrschiene oder als separates mit der Fahrschiene verbindbares Element ausgebildet sein kann, ist zum Gleisinneren gerichtet.

In einer weiter bevorzugten Ausführungsform des erfindungsgemäßen Verfahrens wird die Ausnehmung zentral in dem Schienenlängsverguss hergestellt. "Zentral" bedeutet hier, dass die Ausnehmung von der Schienenkopfflanke und dem Umgebungsmaterial beabstandet ist, so dass sie etwa mittig in dem Schienenlängsverguss hergestellt wird, so dass zwischen der Schienenkopfflanke und der Ausnehmung etwa ebenso viel Material des Schienenlängsvergusses stehen bleibt wie zwischen dem Umgebungsmaterial und der Ausnehmung.

Die Ausnehmung ist vorzugsweise so dimensioniert, dass möglichst wenig Material des Schienenlängsvergusses entfernt werden muss, aber dennoch ausreichend Material entfernt wird, um im Falle einer Verflüssigung des Materials des Schienenlängsvergusses in der Umgebung eines zu reparierenden Schienenfehlers zumindest ein Hineinlaufen des Materials des Schienenlängsvergusses in die Schweißstelle zu verhindern. Dazu kann die Ausnehmung beispielsweise eine Tiefe von 6-12 mm, 6-10 mm oder 7-9 mm, bevorzugt 8 mm, und eine Breite von 10-18 mm, 10-16 mm, 10-14 mm oder 11-13 mm, bevorzugt 12 mm, aufweisen.

Für den Fall, dass eine Schiene beidseitig, d.h. außen wie innen, von einem Schienenlängsverguss flankiert ist, ist es bevorzugt, wenn auch nicht unbedingt notwendig, wenn sowohl im äußeren als auch im inneren Schienenlängsverguss eine Ausnehmung hergestellt wird. Wenn nur in einem der beiden Schienenlängsvergüsse eine Ausnehmung hergestellt wird, ist es bevorzugt, wenn dies im massereicheren Schienenlängsverguss vorgenommen wird, beispielsweise dem äußeren Schienenlängsverguss, d.h. dem Schienenlängsverguss, der auf der Seite der Schiene installiert ist, der vom Gleisinneren abgewendet ist. Wenn in beiden Schienenlängsvergüssen jeweils eine Ausnehmung hergestellt werden soll, kann dies gleichzeitig in einem Arbeitsschritt beispielsweise mittels einer in geeigneter Weise ausgestalteten Fräsmaschine vorgenommen werden.

Die Erfindung wird im Folgenden anhand der beigefügten Figuren zu bevorzugten Ausführungsformen der Erfindung rein zu Veranschaulichungszwecken näher erläutert.
Fig. 1. Schnitt durch einen Teil einer Dämpfungsanordnung gemäß dem Stand der Technik.
Fig. 2. Schnittansicht der in Figur 1 dargestellten Dämpfungsanordnung mit Ausnehmung im Schienenlängsverguss.
Fig. 3. Aufsicht auf einen Abschnitt der in Figur 2 dargestellten Dämpfungsanordnung.

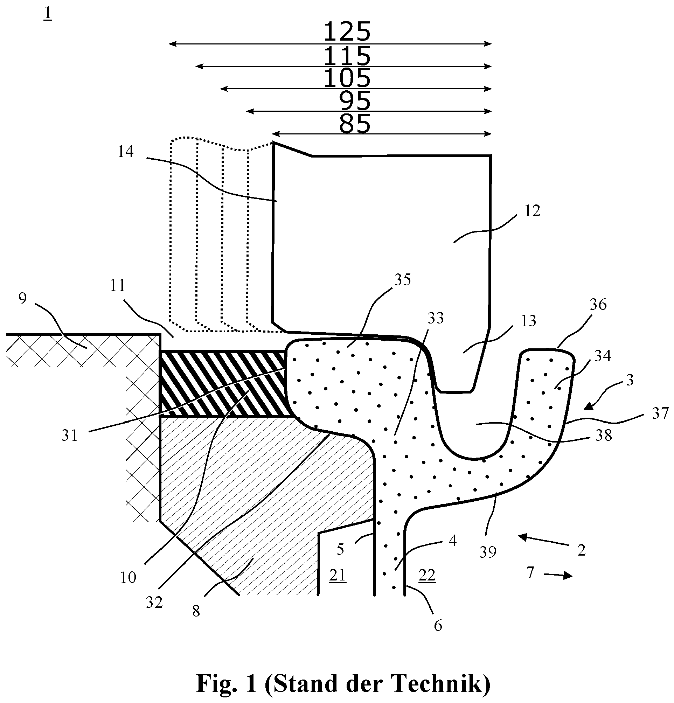

Figur 1 zeigt eine Querschnittansicht eines Teils einer gattungsgemäßen Dämpfungsanordnung 1 für Schienen, wie sie aus dem Stand der Technik bekannt ist. Dargestellt ist der obere Teil einer hier als Rillenschiene ausgebildeten Schiene 2 mit dem Schienenkopf 3 und einem Teil des Schienenstegs 4. In den Schienenkopf 3 ist eine Rille 38 zur Aufnahme des Spurkranzes 13 eines Spurkranzrades 12, beispielsweise eines Straßenbahnrades, eingewalzt. Auf diese Weise sind eine Fahrschiene 33 und eine Leitschiene 34 mit der dazwischen liegenden Rille 38 gebildet. Die Schiene 2 ist in ein starres Umgebungsmaterial 9, beispielsweise Beton oder Asphalt, eingebettet. Die Fahrschiene 33 weist einen Fahrschienenkopf 35 mit einer seitlichen Schienenkopfflanke 31 und einer Schienenkopfunterseite 32, die Leitschiene 34 einen Leitschienenkopf 36, eine seitliche Leitschienenflanke 37 und eine Leitschienenunterseite 39 auf. Ein die äußere Schienenkammer 21 im Wesentlichen ausfüllendes äußeres Seitenprofil 8 ist an der Außenseite 5 der Schiene 2, d.h. an der vom Gleisinneren 7 abgewandten Seite der Schiene 2, angeordnet. Ein häufig auf der Innenseite 6 der Schiene vorhandenes die innere Schienenkammer 22 im Wesentlichen ausfüllendes inneres Seitenprofil ist der besseren Übersicht halber nicht dargestellt. In eine in das starre Umgebungsmaterial 9 hineingefräste Fuge 11 ist ein Schienenlängsverguss 10 aus einem geeigneten Vergussmaterial eingebracht. In der Figur ist nur auf der Außenseite 5 der Schiene ein Schienenlängsverguss 10 zwischen Schienenkopfflanke 31 und Umgebungsmaterial 9 dargestellt. Dargestellt ist hier schematisch auch ein Teil eines auf der Fahrschiene 33 befindlichen Spurkranzrades 12 mit einem Spurkranz 13 und einer Radbandage 14. In der Zeichnung sind beispielhaft verschiedene im Stand der Technik bekannte Breiten (in Millimeter) der Radbandage 14 angegeben. Der Schienenlängsverguss 10 dient unter anderem als Dehnungsfuge und auch dazu, zu verhindern, dass die Radbandage 14 bei zunehmender Abnutzung der Fahrschiene 33 auf dem starren Umgebungsmaterial 9 läuft. Die Breite des Schienenlängsvergusses 10 wird beispielsweise an die Breite der in Frage kommenden Radbandagen 14 entsprechend angepasst.

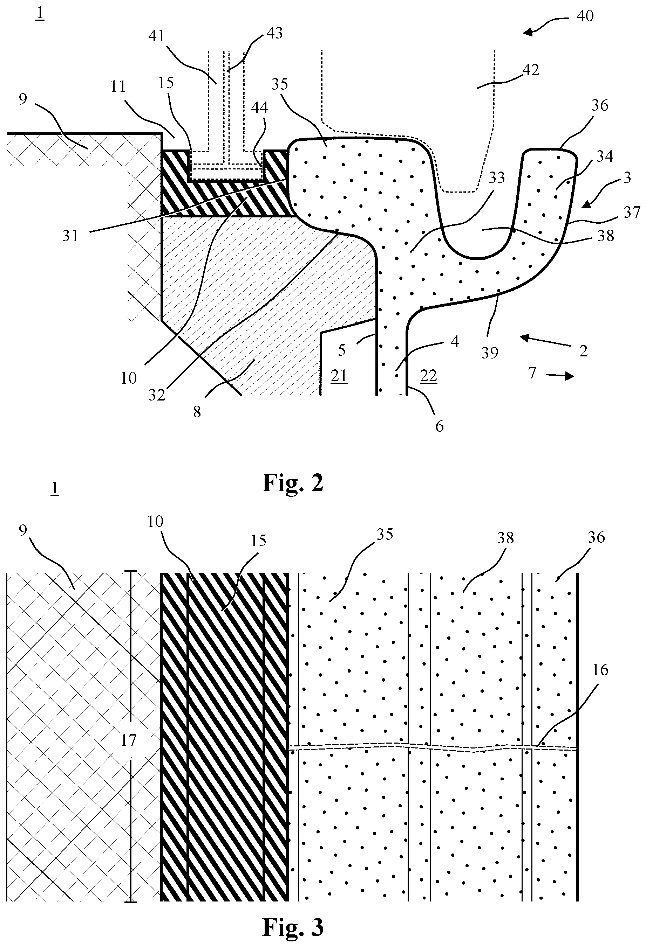

Figur 2 zeigt die in Fig. 1 dargestellte Dämpfungsanordnung 1, bei der mittels des erfindungsgemäßen Verfahrens eine Ausnehmung 15 in dem Schienenlängsverguss 10 hergestellt wurde, um die Schiene 2 in einem Schienenbereich 17 (s. Fig. 3) mittels schweißtechnischer Verfahren zu reparieren. Die im Wesentlichen u-förmige, nach oben, d.h. in Richtung entgegen der Schwerkraft, offene Ausnehmung 15 ist mit Hilfe einer schienengeführten Fräsmaschine 40 hergestellt worden. Dazu kann eine Fräsmaschine 40 eingesetzt werden, die so ausgestaltet ist, dass sie auf dem Gleis, zu dem die zu reparierende Schiene 2 gehört, zwangsgeführt werden kann. Dazu kann die Fräsmaschine 40 mit entsprechend beabstandeten Spurkranzrädern 42 ausgestattet sein, wie in Figur 2 schematisch angedeutet ist. Das Schneidwerkzeug 41 der Fräsmaschine 40, das in Figur 2 ebenfalls nur schematisch angedeutet ist, ist vorzugsweise seitlich in einem geeigneten Abstand angeordnet und zur Erzeugung der Ausnehmung 15 geeignet. Das Schneidwerkzeug 41 und/oder der Schienenlängsverguss 10 können mittels einer Kryoflüssigkeit, beispielsweise flüssigem Kohlendioxid (CO₂), die über einen inneren Kanal 43 und Öffnungen 44 in dem Schneidwerkzeug dem Schneidwerkzeug 41 und/oder dem Schienenlängsverguss 10 zugeführt werden kann, gekühlt. Mittels der Fräsmaschine 40 wird parallel zur Schiene 2 in dem Schienenbereich 17 neben der zu reparierenden Schiene 2 in definierter Weise, vorzugsweise unter Kühlung des Schneidwerkzeugs 41 und/oder des Schienenlängsvergusses 10, eine Ausnehmung 15 in dem Schienenlängsverguss 10 hergestellt. Die Ausnehmung 15 kann beispielsweise eine Tiefe von 8 mm und eine Breite von 12 aufweisen. Die Ausnehmung 15 ist zentral in dem Schienenlängsverguss 10 angeordnet, so dass zur Schiene 2 hin zwischen der Ausnehmung 15 und der Schienenkopfflanke 31 und in Querrichtung von der Schiene 2 weg zwischen der Ausnehmung 15 und dem Umgebungsmaterial 9 Material des Schienenlängsverguss 10 verbleibt. Durch die Herstellung der Ausnehmung 15 wird einerseits Material des Schienenlängsvergusses 10, das sich vor oder während eine Schweißvorgangs verflüssigen kann, entfernt. Darüber hinaus dient die Ausnehmung 15 auch dazu, verflüssigtes Material des Schienenlängsvergusses 10 aufzunehmen. Die Ausnehmung 15 wird lediglich temporär für die Durchführung der Reparaturmaßnahmen hergestellt. Der Schienenlängsverguss 10 wird nach Beendigung der Reparatur oder Änderung gegebenenfalls wieder in den vorherigen Zustand versetzt. Das kann beispielsweise dadurch geschehen, dass im Anschluss an den Reparatur- oder Änderungsschweißvorgang verflüssigtes Schienenlängsverguss-Material in die Schienenfuge 11 nachgegossen wird. Dabei kann gegebenenfalls auch Material wiederverwendet werden, dass vorher aus dem Schienenlängsverguss entfernt wurde. Es ist aber auch nicht in jedem Fall nötig, den Schienenlängsverguss 10 mit zusätzlichem Vergussmaterial wieder zu ergänzen, da sich die Ausnehmung 15 beim Reparaturschweißen durch Verflüssigung des Materials schließt und das verbleibende Material für den gedachten Einsatzzweck ausreichen kann.

Figur 3 zeigt eine vereinfachte Aufsicht auf die in Figur 2 dargestellte Dämpfungsanordnung 1. Schematisch ist hier ein durch Reparaturschweißung zu reparierender Schienenbruch 16 in einem Schienenbereich 17 dargestellt, in dem die Ausnehmung 15 hergestellt wurde. Die Länge des Schienenbereichs 17, in dem die Ausnehmung 15 hergestellt wird, ist beispielsweise davon abhängig, wie umfangreich der zu reparierende Bereich ist und wieviel sich verflüssigendes Material des Schienenlängsvergusses 10 aufzunehmen ist.

## Patentansprüche

1. Verfahren zum Reparatur- oder Änderungsschweißen einer Schiene (2) mit einem eine Schienenkopfflanke (31) aufweisenden Schienenkopf (3), wobei die Schiene (2) auf mindestens einer ihrer Längsseiten in Höhe des Schienenkopfes (3) von einem an der Schienenkopfflanke (31) anliegenden Schienenlängsverguss (10) flankiert ist, umfassend den Schritt des Herstellens einer in Längsrichtung der Schiene (2) verlaufenden, von der Schienenkopfflanke (31) beabstandeten Ausnehmung (15) in dem Schienenlängsverguss (10), und ferner umfassend den Schritt des Reparatur- oder Änderungsschweißens der Schiene (2) in dem Schienenbereich (17) mit der im Schienenlängsverguss (10) hergestellten Ausnehmung (15).

2. Verfahren nach Anspruch 1, wobei die Ausnehmung (15) durch Zerspanen mittels einer schienengeführten Fräsmaschine (40) in dem Schienenlängsverguss (10) hergestellt wird.

3. Verfahren nach Anspruch 2, wobei das Zerspanen nach oder unter Kühlung des Schienenlängsvergusses (10) und/oder eines Schneidwerkzeugs (41) der Fräsmaschine (40) erfolgt, vorzugsweise mittels einer Kryoflüssigkeit, besonders bevorzugt mittels flüssigen Kohlendioxids.

4. Verfahren nach einem der vorhergehenden Ansprüche, ferner umfassend den Schritt des Instandsetzens des Schienenlängsvergusses (10) in dem Schienenbereich (17) mit der im Schienenlängsverguss (10) hergestellten Ausnehmung (15).

5. Verfahren nach einem der vorhergehenden Ansprüche, wobei die Schiene (2) eine Rillenschiene ist.

6. Verfahren nach einem der vorhergehenden Ansprüche, wobei die Ausnehmung (15) zentral in dem Schienenlängsverguss (10) hergestellt wird.

7. Verfahren nach einem der vorhergehenden Ansprüche, wobei die Ausnehmung (15) eine Tiefe von 6-12 mm, 6-10 mm oder 7-9 mm, bevorzugt 8 mm, und eine Breite von 10-18 mm, 10-16 mm, 10-14 mm oder 11-13 mm, bevorzugt 12 mm, aufweist.

## Claims

1. A method for the repair welding or modification welding of a rail (2) with a rail head (3) having a rail head flank (31), wherein the rail (2) is flanked, on at least one of its longitudinal sides, at the height of the rail head (3) by a rail longitudinal casting compound (10) resting against the rail head flank (31), comprising the step of producing, in the rail longitudinal casting compound (10), a cutout (15) that runs in the longitudinal direction of the rail (2) and is spaced apart from the rail head flank (31), and further comprising the step of repair welding or modification welding the rail (2) in the rail region (17) with the cutout (15) produced in the rail longitudinal casting compound (10).

2. The method according to claim 1, wherein the cutout (15) is produced in the rail longitudinal casting compound (10) by machining by means of a rail-guided milling machine (40).

3. The method according to claim 2, wherein the machining is carried outer after or while cooling the rail longitudinal casting compound (10) and/or a cutting tool (41) of the milling machine (40), preferably by means of a cryogenic liquid, particularly preferably by means of liquid carbon dioxide.

4. The method according to any one of the preceding claims, further comprising the step of refurbishing the rail longitudinal casting compound (10) in the rail region (17) with the cutout (15) produced in the rail longitudinal casting compound (10).

5. The method according to any one of the preceding claims, wherein the rail (2) is a grooved rail.

6. The method according to any one of the preceding claims, wherein the cutout (15) is produced centrally in the rail longitudinal casting compound (10).

7. The method according to any one of the preceding claims, wherein the cutout (15) has a depth of 6-12 mm, 6-10 mm or 7-9 mm, preferably 8 mm, and a width of 10-18 mm, 10-16 mm, 10-14 mm or 11-13 mm, preferably 12 mm.

## Revendications

1. Procédé de soudage de réparation ou de modification d'un rail (2) avec une tête de rail (3) comportant un flanc de tête de rail (31), sachant que le rail (2) est flanqué d'une masse de remplissage longitudinale de rail (10) attenante au flanc de tête de rail (31) sur au moins un de ses côtés longitudinaux à hauteur de la tête de rail (3), comprenant l'étape de réalisation d'un évidement (15) dans la masse de remplissage longitudinale de rail (10) passant en direction longitudinale du rail (2), à distance du flanc de tête de rail (31), et comprenant en plus l'étape de soudage de réparation ou de modification du rail (2) dans la zone de rail (17) avec l'évidement (15) réalisé dans la masse de remplissage longitudinale de rail (10).

2. Procédé selon la revendication 1, sachant que l'évidement (15) est réalisé par enlèvement de copeaux dans la masse de remplissage longitudinale de rail (10) au moyen d'une fraiseuse (40) guidée par rail.

3. Procédé selon la revendication 2, sachant que l'enlèvement de copeaux a lieu après ou pendant refroidissement de la masse de remplissage longitudinale de rail (10) et/ou d'un outil de coupe (41) de la fraiseuse (40), de préférence au moyen d'un fluide cryogénique, en particulier de préférence au moyen de dioxyde de carbone liquide.

4. Procédé selon l'une quelconque des revendications précédentes comprenant en plus l'étape de mise en oeuvre de la masse de remplissage longitudinale de rail (10) dans la zone de rail (17) avec l'évidement (15) réalisé dans la masse de remplissage longitudinale de rail (10).

5. Procédé selon l'une quelconque des revendications précédentes, sachant que le rail (2) est un rail à gorge.

6. Procédé selon l'une quelconque des revendications précédentes , sachant que l'évidement (15) est réalisé au centre dans la masse de remplissage longitudinale de rail (10).

7. Procédé selon l'une quelconque des revendications précédentes, sachant que l'évidement (15) comporte une profondeur de 6-12 mm, 6-10 mm ou de 7-9 mm, de préférence de 8 mm et une largeur de 10-18 mm, 10-16 mm, 10-14 mm ou de 11-13 mm, de préférence de 12 mm.
